# EUROPÄISCHE PATENTANMELDUNG

(11) **EP 0 913 527 A1**
(43) Veröffentlichungstag der Anmeldung: **06.05.1999**
(21) Anmeldenummer: 98120771.5
(22) Anmeldetag: 02.11.1998
(51) Int. Cl.: E02D 31/08, E01B 19/00

(54) **Bausatz zur Errichtung einer Körperschall-Lärmschutz-Wand**

(30) Priorität: 31.10.1997 DE 29719386 U
(71) Anmelder: WEGU Gummi- und Kunststoffwerke Walter Dräbing KG, 34123 Kassel (DE); KVG Kasseler Verkehrs-Gesellschaft AG, 34131 Kassel (DE)
(72) Erfinder: Die Erfindernennung liegt noch nicht vor
(74) Vertreter: Patentanwälte Rehberg + Hüppe

(57) **Zusammenfassung**

Ein Bausatz zur Errichtung einer Körperschall-Lärmschutz-Wand, mit flächigen Abschirmelementen (9) zum vertikalen Einbringen in eine schlitzförmige Bodenausnehmung (8), wobei die Bodenausnehmung (8) beiderseits der Abschirmelemente (9) mit einem aushärtenden Zementgemisch (15) aufzufüllen ist, ist erfindungsgemäß dadurch gekennzeichnet, daß die Abschirmelemente (9) senkrecht zu ihrer Haupterstreckungsebene einen mehrschichtigen Aufbau aufweisen, wobei mindestens eine Deckschicht (19) auf einer der beiden Seiten der Abschirmelemente (9) aus Beton (20) ausgebildet ist und wobei mindestens eine elastische Mittelschicht (21) hinter der Deckschicht (19) angeordnet ist.

## Beschreibung

Die Erfindung bezieht sich auf einen Bausatz zur Errichtung einer Körperschall-Lärmschutz-Wand, mit flächigen Abschirmelementen zum vertikalen Einbringen in eine schlitzförmige Bodenausnehmung, wobei die Bodenausnehmung beiderseits der Abschirmelemente mit einem aushärtenden Zementgemisch aufzufüllen ist.

Die Erfindung fällt auf das Gebiet des Körperschall-Lärmschutzes insbesondere im Zusammenhang mit Schienenfahrzeugen. Schienenfahrzeuge regen Körperschall der sie tragenden Schienen an, der ohne irgendwelche Körperschall-Lärmschutzmaßnahmen über den Erdboden beispielsweise auf in der Nähe befindliche Gebäude übertragen wird und diese insbesondere bei häufiger Einwirkung über längere Zeiträume hinweg beschädigen kann. Die Erfindung ist aber nicht auf den Körperschall-Lärmschutz in Zusammenhang mit Schienenfahrzeugen beschränkt, sondern kann überall dort Verwendung finden, wo ein Körperschall-Lärmschutz sinnvoll oder gar unbedingt erforderlich ist.

Zur Dämmung des Körperschalls von Schienen, die durch darüberfahrende Schienenfahrzeuge angeregt werden, ist die weichelastische Lagerung der Schienen bekannt, wobei die Schienen vertikal und lateral durch Bauelemente aus Elastomerwerkstoff abgestützt werden. Eine Körperschall-Dämmung direkt der Schienen ist aber beispielsweise im Bereich von Weichen grundsätzlich nicht möglich, und im Bereich von Kurven ist bei in Elastomerwerkstoff gebetteten Schienen das übliche Aufschweißen von neuen Abroll- oder Abstützflächen auf die Schienen zum Verschleißausgleich nicht möglich, da der Elastomerwerkstoff nicht stark erwärmt werden darf. Gerade im Bereich von Weichen und Kurven ist aber die Körperschall-Anregung von Schienen durch darüberfahrende Schienenfahrzeuge besonders groß.

Es ist weiterhin bekannt, mit sogenannten Unterschottermatten einen gesamten Gleiskörper gegenüber dem Erdboden abzuschirmen, um die Übertragung von Körperschall auf den Erdboden einzudämmen. Die Verwendung von Unterschottermatten ist ebenso wie die elastische Lagerung der Schienen mit großem Aufwand beim Aufbau des Gleiskörpers verbunden. Erdbodenseitig muß eine Betonwanne angelegt werden, an der sich die Unterschottermatte abstützt. Hierauf wird dann der eigentliche Gleiskörper aufgebaut. Mit besonderem Aufwand ist Verwendung von Unterschottermatten verbunden, wenn Schienenverzweigungen und Schienenkreuzungen, in deren Bereich, wie bereits erwähnt, eine besonders intensive Anregung von Körperschall erfolgt, gegenüber dem Erdboden isoliert werden sollen. Weitere Probleme kommen hinzu, wenn beispielsweise Straßenbahnschienen innerhalb einer Fahrbahn für normale Kraftfahrzeuge zu verlegen sind, weil dann die Austrittspunkte der Unterschottermatten in die Fahrbahndecke kritische Punkte sind. Ein nachträgliches Anbringen einer Unterschottermatte bei einem bestehenden Gleiskörper ist grundsätzlich nicht möglich. Auch eine elastische Lagerung der Schienen unter Verwendung von Elastomerwerkstoff ist nachträglich mit einem extremen Aufwand verbunden.

Aus der DE-Z Forschung + Praxis, Band 34, Seiten 157 bis 160 ist ein Bausatz der eingangs beschriebenen Art zur Errichtung einer Körperschall-Lärmschutz-Wand bekannt. Die flächigen Abschirmelemente bestehen hier aus horizontal verlaufenden und sich vertikal teilweise überdeckend angeordneten gasgefüllten Zylindern. Die Zylinder werden durch eine Kunststoffmembran ausgebildet, die von einer Aluminiumfolie eingeschlossen wird. Die Oberfläche der gesamten Abschirmelemente wird von einem Geotextil ausgebildet. Am unteren Ende der Abschirmelemente aus den gasgefüllten Zylindern ist jeweils ein Ballastkörper angebracht, um die Abschirmelemente in die schlitzförmige Bodenausnehmung abzusenken. Mehrere Abschirmelemente werden nicht auf Stoß zueinander sondern mit teilweiser Überlappung in Längsrichtung in der Bodenausnehmung angeordnet. Die Bodenausnehmung wird mit einem Betonit-Zement-Gemisch aufgefüllte, das nach seiner Aushärtung die relativ empfindlichen bekannten Abschirmelemente schützt und versiegelt. Die Höhe der bekannten Abschirmelemente beträgt 8 m. Die Wirkung der bekannten Abschirmelemente beruht auf einer weitgehenden Isolierung der Teile des Erdbodens, die seitlich an die Abschirmelemente angrenzen, weil der Körperschall aus dem einen Teil des Erdbodens durch das Gas in den gasgefüllten Zylindern nicht nennenswert auf den anderen Teil des Erdbodens übertragen wird. Ein gewisser Körperschall-Übertrag erfolgt noch durch die Zylinderwandungen. Nachteilig bei dem bekannten Bausatz zur Errichtung einer Körperschall-Lärmschutz-Wand ist, daß die Abschirmelemente aus den gasgefüllten Zylindern aufwendig in der Herstellung sind. Ebenso ist das Einbringen der Abschirmelemente in die schlitzförmige Bodenausnehmung und insbesondere das mittige Anordnen der Abschirmelemente in der aufzufüllenden Bodenausnehmung schwierig. Weiterhin ist die Langzeitstabilität der bekannten Abschirmelemente kritisch zu sehen. Ein Hindurchführen von Versorgungsleitungen quer durch die bekannten Abschirmelemente dürfte unmöglich sein.

Vor diesem Hintergrund liegt der Erfindung die Aufgabe zugrunde, einen Bausatz zur Errichtung einer Körperschall-Lärmschutz-Wand der eingangs beschriebenen Art aufzuzeigen, dessen Abschirmelemente kostengünstig herzustellen und bei der Errichtung der Körperschall-Lärmschutz-Wand gut zu handhaben sind.

Erfindungsgemäß wird diese Aufgabe dadurch gelöst, daß bei einem Bausatz zur Errichtung einer Körperschall-Lärmschutz-Wand der eingangs beschriebenen Art die Abschirmelemente senkrecht zur Ihrer Haupterstreckungsebene einen mehrschichtigen Aufbau aufweisen, wobei mindestens eine Deckschicht auf einer der beiden Seiten der Abschirmelemente aus Beton ausgebildet ist und wobei mindestens eine elastische Mittelschicht hinter der Deckschicht angeordnet ist. Die neuen Abschirmelemente sind mindestens zweischichtig und vorzugsweise mindestens dreischichtig, wobei auf beiden Seiten der Abschirmelemente Deckschichten aus Beton vorgesehen sind. In jedem Fall ist eine Deckschicht auf einer der beiden Seiten der Abschirmelemente aus Beton vorgesehen. Hinter dieser Deckschicht bzww. zwischen zwei Deckschichten kann sich eine oder können sich mehrere Mittelschichten und weitere Zwischenschichten befinden. Die Deckschichten aus Beton verleihen den neuen Abschirmelementen eine Stabilität, wie sie zum Errichten des Grundgerüstes einer Körperschall-Lärmschutz-Wand in der schlitzförmigen Bodenausnehmung erforderlich ist. Gleichzeitig sind die Deckschichten der Abschirmelemente aus Beton als eine Art verlorene Schalung für das aushärtende Zementgemisch zum Auffüllen der Bodenausnehmung in Richtung auf die mindestens eine elastische Mittelschicht zu sehen. Bei dem aushärtenden Zementgemisch handelt es sich bei der Erfindung vorzugsweise um einen Fließbeton, der möglichst nahtlos an die Deckschichten der Abschirmelemente aus Beton anschließt bzw. anbindet. Wenn nur eine Deckschicht aus Beton vorgesehen ist, wird die zweite Deckschicht quasi durch den an die Mittelschicht angegossenen Fließbeton bei der fertigen Körperschall-Lärmschutz-Wand ersetzt. Die elastische Mittelschicht der neuen Abschirmelemente zwischen den Deckschichten verhindert die freie Übertragung von Körperschall zwischen den beiden Deckschichten. Die elastische Mittelschicht der neuen Abschirmelemente ist zum einen grundsätzlich nicht so empfindlich wie die gasgefüllten Zylinder aus dem Stand der Technik. Zum anderen wird sie durch die definierten Grenzflächen zu der bzw. den Deckschicht(en) bereits während des Verbaus der Abschirmelemente und auch später im Erdboden dauerhaft und zuverlässig geschützt. Aus Gewichtsgründen sollten die Deckschichten der Abschirmelemente aus Beton möglichst dünn sein. Gleichzeitig ist bei einer gegebenen Größe der einzelnen Abschirmelemente einer ausreichenden mechanischen Stabilität Rechnung zu tragen. Im verbauten Zustand wird die Stabilität der Deckschichten durch den die Bodenausnehmung ausfüllenden Fließbeton unterstützt. Denkbar sind Dicken der Deckschichten von 3 bis 6 cm aufwärts. Die Deckschichten können auch einen Bewehrung beispielsweise aus in den Beton eingebetteten Stahlmatten aufweisen, um ihre Stabilität zu erhöhen.

Mindestens eine der elastischen Mittelschichten kann aus einem weichen Elastomerwerkstoff ausgebildet sein. Unter einem weichen Elastomerwerkstoff ist ein Elastomerwerkstoff mit möglichst geringer Shorehärte, d. h. mit möglichst geringer Progressivität der von ihm einer Verformung entgegengesetzten Gegenkräfte zu verstehen. Zur Herabsenkung der Härte der elastischen Mittelschicht kann ihre Dicke erhöht werden. Dies führt aber automatisch zu einer Kostensteigerung bei den Abschirmelementen, weil mehr Elastomerwerkstoff benötigt wird. Interessant ist daher insbesondere die Verwendung eines von Haus aus sehr weichen Elastomerwerkstoffs in einer vergleichsweise geringen Schichtdicke ab etwa 1 bis 2 cm.

Neben der Auswahl eines weichen Elastomerwerkstoffs für die mindestens eine elastische Mittelschicht, können bei dieser auch Luftkammern zur Verbesserung der Körperschall-Dämmung zwischen den beiden Deckschichten vorgesehen sein.

Denkbar ist beispielsweise, die elastische Mittelschicht mit den Luftkammern im Querschnitt wabenförmig aufzubauen.

Alternativ oder parallel zu einer besonders weichen elastischen Mittelschicht mit dem Ziel einer Körperschall-Dämmung kann auch der Aspekt einer Körperschall-Dämpfung bei den neuen Abschirmelementen verfolgt werden. Hierzu kann mindestens eine elastische Mittelschicht aus einem schwingungsenergiedissipativen Elastomerwerkstoff ausgebildet sein. In diesem Zusammenhang wird deutlich, daß "elastische Mittelschicht" bei der Erfindung nicht bedeutet, daß eine ideale Federelastizität der Mittelschicht gegeben ist. Vielmehr ist es für eine Körperschall-Dämpfung sogar besonders interessant, wenn die elastische Mittelschicht auch ausgeprägte Dämpfungs-Eigenschaften aufweist.

Die elastische Mittelschicht kann neben einem homogenen oder auch einem geschäumten Elastomerwerkstoff beispielsweise auch aus Kunststoffgranulat ausgebildet sein, welches in geeigneter Weise zwischen den Deckschichten eingekammert ist. Die einzelnen Körner des Kunststoffgranulats müssen keine ausgeprägten Elastizitäten aufzuweisen. Gute Körperschall-Dämpfungs- und -Dämmungseigenschaften ergeben sich aufgrund der Tatsache, daß die einzelnen Körner des Kunststoffgranulats in der elastischen Mittelschicht gegeneinander verschoben werden können. Für eine elastische Mittelschicht aus Kunststoffgranulat bietet sich insbesondere geschreddertes Altkunststoffmaterial an. Aber auch bei einer elastischen Mittelschicht aus Elastomerwerkstoff kann Rezyklat eingesetzt werden.

Die Erfindung ist nicht auf Abschirmelemente beschränkt, bei denen zwischen den beiden Deckschichten nur eine elastische Mittelschicht vorgesehen ist. Beispielsweise ist auch denkbar, daß zwischen zwei elastischen Mittelschichten eine schwere, steife Zwischenschicht vorgesehen ist. Diese kann beispielsweise aus Metall oder Beton ausgebildet sein. Eine schwere und steife Zwischenschicht kann in gewisser Weise auch die Funktion eines Schwingungstilgers übernehmen, wobei jedoch zu berücksichtigen ist, daß sie in Reihe zwischen die beiden Deckschichten geschaltet ist. Die Schwingungstilgerfunktion kann sich daher nur dann positiv auswirken, wenn die schwere und steife Zwischenschicht ausgangsseitig weicher angekoppelt ist als eingangsseitig oder für die beiden elastischen Mittelschichten zumindest schwingungsenergiedissipative Elastomerwerkstoffe verwendet werden.

Zum Zusammensetzen der einzelnen Abschirmelemente zwecks Errichtung des Grundgerüstes für die Körperschall-Lärmschutz-Wand können die einzelnen Abschirmelemente in ihrer Haupterstrekckungsebene durch Nut-und-Feder-Anordnungen miteinander verbindbar sein. Die einzelnen Abschirmelemente sind bei dem neuen Bausatz nur so groß ausgebildet, daß sie noch gut handhabbar sind. Dies bedeutet, daß mehrere Abschirmelemente übereinander angeordnet werden müssen, um die sinnvolle Höhe von etwa ab 3 m für die Körperschall-Lärmschutz-Wand zu erreichen. Die Nut-und-Feder-Anordnungen erlauben nicht nur ein Aufeinanderstellender der einzelnen Abschirmelemente, sondern richten dabei auch die einzelnen Schichten der Abschirmelemente in den richtigen Ebenen zueinander aus. Dies ist für den neuen Bausatz von besonderer Bedeutung, weil sonst Körperschall-Brücken ausgebildet werden können.

Aufgestellt werden können die einzelnen Abschirmelemente auf eine Bodenplatte, die am Grund der Bodenausnehmung anzuordnen ist. Die Bodenplatte kann ihrerseits ebenfalls mit einer Nut oder Feder versehen sein, um eine genau definierte Position für die darauf aufzustellenden Abschirmelemente vorzugeben.

Für quer zu der schlitzförmigen Bodenausnehmung verlaufende steife Versorgungsleitungen kann der neue Bausatz elastische Zwischenstücke vorsehen, die in die Abschirmelemente einsetzbar sind und die zumindest im Bereich einer elastischen Mittelschicht der Abschirmelemente die steifen Versorgungsleitungen ersetzen. Auf diese Weise wird auch eine Körperschall-Übertragung durch die steifen Versorgungsleitungen quer zu der Körperschall-Lärmschutz-Wand verhindert. Kabel und andere nichtsteife Versorgungsleitungen können einfach durch die Körperschall-Lärmschutz-Wand hindurchgeführt werden, da sie keine nennenswerten Körperschall-Brücken darstellen.

Alternativ können für quer zu der schlitzförmigen Bodenausnehmung verlaufende steife Versorgungsleitungen auch elastische Manschetten vorgesehen sein, die durch die Abschirmelemente hindurch führbar sind und die die Versorgungsleitungen zumindest im Bereich der Deckschichten der Abschirmelemente aus Beton und des ausgehärteten Zementgemisches in der ausgefüllten Bodenausnehmung bezüglich ihrer Körperschall-Schwingungen entkoppeln und/oder dämpfen. Dabei bedeutet das Entkoppeln von den Deckschichten und dem ausgehärteten Zementgemisch, daß die steifen Versorgungsleitungen zumindest keine direkten Körperschall-Brücken zwischen diesen Bestandteilen der Körperschall-Lärmschutz-Wand darstellen und ihre Körperschall-Brückenwirkung auf die Übertragung von Körperschall zwischen den Bereichen des Erdbodens beiderseits der Körperschall-Lärmschutz-Wand beschränkt ist. Die Dämpfung der steifen Versorgungsleitungen ist so zu verstehen, daß die elastische Manschette die Funktion eines aufgesetzten Schwingungsdämpfers aufweist und auf diese Weise die Übertragung von Körperschall zwischen den beiden angrenzenden Bereichen des Erdbodens über die Körperschall-Lärmschutz-Wand hinweg verhindert oder zumindest reduziert.

Die Erfindung wird im folgenden anhand von Ausführungsbeispielen näher erläutert und beschrieben. Dabei zeigt
- Figur 1: die prinzipielle Anwendung einer aus dem neuen Bausatz erstellten Körperschall-Lärmschutz-Wand,
- Figur 2: eine vergrößerte Darstellung der Körperschall-Lärmschutz-Wand gemäß Figur 1,
- Figur 3: ein Detail der Körperschall-Lärmschutz-Wand gemäß Figur 2 im Querschnitt,
- Figur 4: eine erste Ausführungsform eines Abschirmelements des neuen Bausatzes im Querschnitt,
- Figur 5: eine zweite Ausführungsform eines Abschirmelements des neuen Bausatzes im Querschnitt,
- Figur 6: eine dritte Ausführungsform eines Abschirmelements des neuen Bausatzes im Längsschnitt,
- Figur 7: eine vierte Ausführungsform eines Abschirmelements des neuen Bausatzes im Querschnitt,
- Figur 8: eine fünfte Ausführungsform eines Abschirmelements des neuen Bausatzes im Querschnitt,
- Figur 9: ein Zwischenstück für eine steife Versorgungsleitung durch ein Abschirmelement des neuen Bausatzes im Querschnitt durch das Abschirmelement und
- Figur 10: eine elastische Manschette um eine steife Versorgungsleitung im Querschnitt durch ein Abschirmelement.

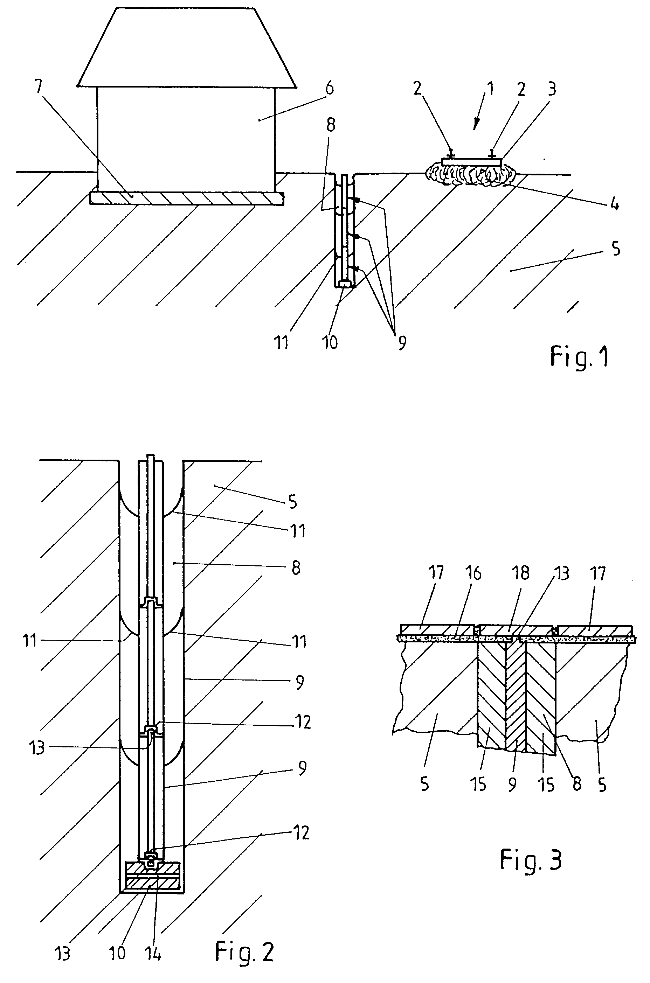

In Figur 1 ist ein typisches Körperschall-Problem skizziert. Ein Gleiskörper 1 weist Schienen 2 auf, die auf Schwellen 3 gelagert sind, welche wiederum auf einem Gleisbett 4 ruhen. Dabei ist der in Figur 1 dargestellte Aufbau des Gleiskörpers 1 nur als prinzipielles Beispiel zu sehen. Wenn ein hier nicht dargestelltes Schienenfahrzeug über die Schienen 2 rollt, werden diese zu Körperschall-Schwingungen angeregt. Diese Schwingungen werden von den Schienen 2 auf die Schwellen 3, das Gleisbett 4 und den darunter befindlichen Erdboden 5 übertragen. Über den Erdboden 5 kann der Körperschall zu einem dem Gleiskörper 1 benachbarten Gebäude 6 gelangen. Dabei erfolgt die Einwirkung des Körperschalls auf das Gebäude 6 über dessen Fundament 7.

Mit dem erfindungsgemäßen Bausatz kann eine Körperschall-Lärmschutz-Wand im Erdboden 5 errichtet werden, um die oberflächennahe Körperschall-Übertragung von dem Gleiskörper 1 auf das Fundament 7 des Gebäudes 6 zumindest in erheblichem Umfang zu reduzieren. Zur Errichtung der Körperschall-Lärmschutz-Wand wird eine Bodenausnehmung 8 mit einer Tiefe von ca. 4 m in den Erdboden 5 eingebracht. Die typische Breite der Bodenausnehmung 8 beträgt 80 cm. Am Grund der Bodenausnehmung 8 wird eine Bodenplatte 10 angeordnet. Auf die Bodenplatte 10 werden übereinander und nebeneinander mehrere Abschirmelemente 9 aufgestellt. Dabei sind elastische Stützarme 11 vorgesehen, die die Abschirmelemente 9 an dem die Bodenausnehmung 8 begrenzenden Erdboden 5 abstützen. Da die Stützarme 11 auf beiden Seiten der Abschirmelemente 9 vorgesehen sind, ergibt sich eine Zentrierung der Abschirmelemente 9 in der Bodenausnehmung 8. Zur Fertigstellung der Körperschall-Lärmschutz-Wand wird die Bodenausnehmung 8 mit einem aushärtenden Zementgemisch aufgefüllt. Bei der Erfindung handelt es sich hierbei vorzugsweise um Fließbeton. Der Vorteil einer derartigen Körperschall-Lärmschutz-Wand besteht darin, daß sie auch nachträglich, d. h. bei bestehendem Gleiskörper 1 errichtet werden kann. Dies bedeutet gleichzeitig, daß die Errichtung der Körperschall-Lärmschutz-Wand den Schienenverkehr auf dem Gleiskörper 1 nicht beeinträchtigt, sondern der Schienenverkehr ungestört weiterlaufen kann. Weiterhin ist die Position der Körperschall-Lärmschutz-Wand zwischen dem Gleiskörper 1 und dem Fundament 7 variabel, wobei jedoch nicht bei jeder Position dieselben Körperschall-Lärmschutz-Effekte erreicht werden. Besonders gute Effekte werden bei Errichtung der Körperschall-Lärmschutz-Wand relativ nahe an dem Gleiskörper 1 oder dem Fundament 7 erreicht. Die Flexibilität bei der Anordnung der Körperschall-Lärmschutz-Wand zwischen dem Gleiskörper 1 und dem Fundament 7 stellt aber beispielsweise sicher, daß die Körperschall-Lärmschutz-Wand im Falle eines Gleiskörpers 1 für eine Straßenbahn im öffentlichen Bereich, d. h. im Straßen- oder Bürgersteigbereich, errichtet werden kann, was naturgemäß mit den geringsten Schwierigkeiten verbunden ist. Die Körperschall-Lärmschutz-Wand kann aber auch zur Absicherung eines einzelnen Gebäudes 6 durch dessen Eigentümer verwendet werden und dabei unmittelbar an das Fundament 7 des Gebäudes 6 angrenzen. Aufgrund Ihres im folgenden beschriebenen Aufbaus kann sie dabei gleichzeitig eine Feuchtigkeits- und Wärmeisolierung für das Gebäude 6 in dessen Kellerbereich ausbilden.

Figur 2 gibt den Aufbau des Grundgerüstes für die Körperschall-Lärmschutz-Wand aus der Bodenplatte 10 und den Abschirmelementen 9 gemäß Figur 1 vergrößert wieder. Die die Aufstandfläche für die Abschirmelemente 9 ausbildende Bodenplatte 10 weist an ihrer Oberseite eine Nut 12 auf, in die eine Feder 13 eingesetzt ist. Die Feder 13 ist als separates Bauteil aus einem elastischen Material ausgebildet und greift in eine Nut 12 an der Unterseite des untersten Abschirmelements 9 ein. Eine Feder 14 an der Stirnseite der Bodenplatte 10 dient zum Verbinden mit weiteren Bodenplatten. Nut-und-Feder-Anordnungen 12, 13 sind ebenfalls zwischen den Abschirmelementen 9 sowohl in vertikaler als auch in horizontaler Richtung vorgesehen, um die einzelnen Abschirmelemente 9 exakt gegeneinander auszurichten. Dabei ist aber die Feder 13 in aller Regel ein integraler Bestandteil der Abschirmelemente 9, wobei sie ebenso wie die Feder 13 zwischen der Bodenplatte 10 und dem unteren Abschirmelement 9 aus einem elastischen Material ausgebildet sind. Die elastischen Stützarme 11 können ohne seitliche Beaufschlagung, d. h. außerhalb der Bodenausnehmung 8 etwa senkrecht von den Abschirmelementen 9 abstehen. Sie werden dann beim Einführen der Abschirmelemente 9 in die Bodenausnehmung 8 in die dargestellte Form verbogen. Die verbogene Form hat den Vorteil, daß die Stützarme 11 Unterschiede in der Breite der Bodenausnehmung 8 ohne weiteres ausgleichen.

Figur 3 zeigt einen Querschnitt durch den oberen Bereich einer fertiggestellten und abgedeckten Körperschall-Lärmschutz-Wand. Die Bodenausnehmung 8 ist beiderseits der Abschirmelemente 9 mit ausgehärtetem Fließbeton 15 aufgefüllt. Der Fließbeton 15 stützt sich im seitlichen Randbereich der Bodenausnehmung 8 direkt an dem Erdboden 5 ab. Oberhalb der Körperschall-Lärmschutz-Wand 9, 15 sind Platten 17, 18 in Sand 16 verlegt. Bei der Platte 18 direkt über der Körperschall-Lärmschutz-Wand 9, 15 handelt es sich um eine Gummiplatte, die ohne die Zwischenordnung des Sands 16 direkt auf der Feder 13 aus elastischem Material am oberen Rand des obersten Abschirmelements 9 aufliegt. Diese Anordnung verhindert die Übertragung von Körperschall in der Ebene der Platten 17, 18 über die Körperschall-Lärmschutz-Wand hinweg.

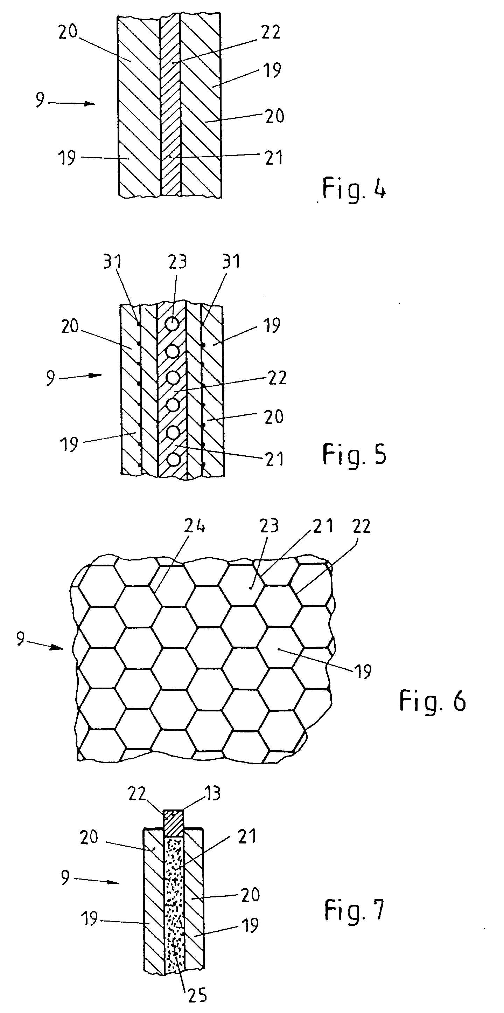

Im Bereich der Körperschall-Lärmschutz-Wand 9, 15 wird die Körperschall-Übertragung durch den Aufbau der Abschirmelemente 9 verhindert oder zumindest in engen Grenzen gehalten. Die in Figur 4 dargestellte Ausführungsform des Abschirmelements 9 weist zwei äußere Deckschichten 19 aus Beton 20 und eine elastische Mittelschicht 21 aus einem weichen Elastomerwerkstoff 22 auf. Die elastische Mittelschicht aus dem weichen Elastomerwerkstoff 22 entkoppelt die beiden Deckschichten 19 und alle jeweils angrenzenden Bereiche bezüglich ihrer Körperschall-Schwingungen. Die Entkopplung ist umso größer, je weicher der Elastomerwerkstoff 22 ist und umso breiter die Mittelschicht 21 ist. Aus Kostengründen ist ein möglichst weicher Elastomerwerkstoff zu verwenden, der auch bei einer vergleichsweise geringen Dicke der Mittelschicht von ca. 2 cm bereits eine gute Entkopplung der Deckschichten 19 ergibt.

Die Ausführungsform von Figur 5 macht deutlich, wie die Menge des Elastomerwerkstoffs 22 und gleichzeitig die Weichheit der Mittelschicht 21 erhöht werden können, indem Luftkammern 28 in der Mittelschicht 21 vorgesehen werden. Weiterhin ist in Figur 5 skizziert, daß eine Bewehrung 31 in den Deckschichten 19 aus Beton 20 vorgesehen sein kann, um diese bei geringer Dicke und damit geringer Masse ausreichend stabil zum Errichten des Grundgerüstes für die Körperschall-Lärmschutz-Wand gemäß Figur 2 sind. Die typische Mindestdicke für die Deckschicht 19 aus Beton beträgt 4 bis 6 cm. Es ist zu berücksichtigen, daß die Deckschichten 19 später durch den Fließbeton 15 gemäß Figur 3 stabilisiert werden und ebenso wie der Fließbeton 15 auch die Mittelschicht 21 eine etwaige Bewehrung 31 der Deckschichten 19 vor Korrosion schützen, die im übrigen bei der fertigen Körperschall-Lärmschutz-Wand keine besondere Bedeutung für die Gesamtstabilität mehr hat.

In Figur 6 ist gezeigt, daß die Luftkammern 23 auch das wesentliche Volumen der Mittelschicht 21 ausmachen können, wenn beispielsweise eine in dem gezeigten Querschnitt wabenförmige Anordnung des Elastomerwerkstoffs 22 gewählt wird. Dabei ist die eingesetzte Menge des Elastomerwerkstoffs 22 im Vergleich zu dem Gesamtvolumen der Mittelschicht 21 günstigerweise nur gering.

Die Kosten für die Errichtung der Mittelschicht 21 können auch reduziert werden, indem die Mittelschicht 21 aus Kunststoffgranulat 25 ausgebildet wird, wie in Figur 7 gezeigt ist. Dabei ist das Kunststoffgranulat 25 hier durch Elastomerwerkstoff 22 eingekammert, der gleichzeitig eine Feder 13 an der Oberkante des gezeigten Abschirmelements 9 ausbildet. Das Kunststoffgranulat 25 kann durch Schreddern von wieder eingesammelten Kunststoffprodukten gewonnen werden. Für die Schallschutz-Eigenschaften der Mittelschicht 21 aus Kunststoffgranulat 25 kommt es nicht unbedingt darauf an, daß die einzelnen Körner des Kunststoffgranulats 25 weich-elastisch sind. Vielmehr kommt es auf die Elastizität des Granulats 25 als solches an, in dem sich auch einzelne Körner des Granulats 25 elastisch gegeneinander verschieben können. Mit dieser Verschiebung kann auch eine Körperschall-Schwingungsernergiedissipation verbunden sein, so daß das Abschirmelement 9 gemäß Figur 7 neben einer Körperschall-dämmenden auch eine ausgeprägte Körperschall-dämpfende Wirkung hat.

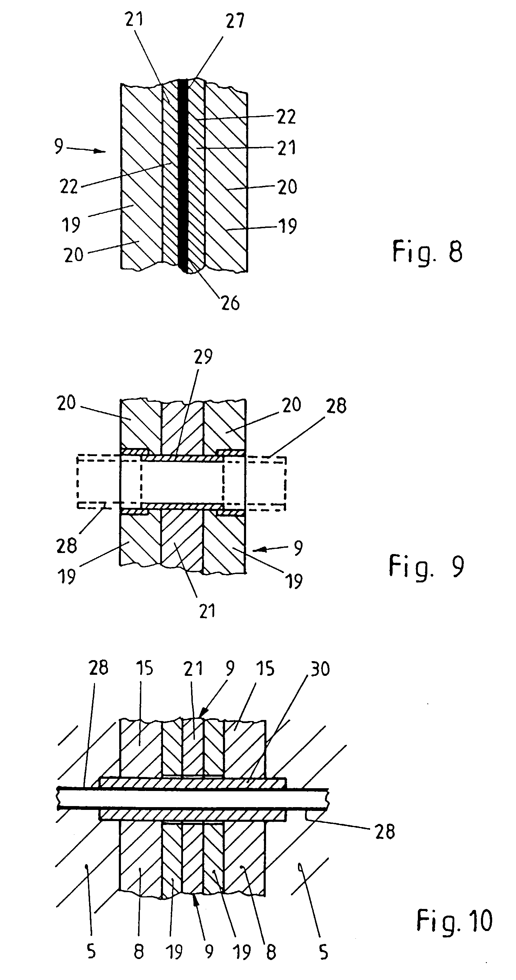

Dies gilt auch für die Ausführungsform des Abschirmelements 9 gemäß Figur 8. Hier sind zwei Mittelschichten 21 aus einem Elastomerwerkstoff 22 vorgesehen, der sich durch eine besonders große Körperschall-schwingungsenergiedissipative Wirkung auszeichnet. Das heißt, der Elastomerwerkstoff 22 verformt sich unter der Einwirkung von Körperschall zwar elastisch, er zeigt aber kein ideal-elastisches Verhalten. Vielmehr wird ein Großteil der einwirkenden Schwingungsenergie in Wärmeenergie umgewandelt. Als weitere Maßnahme zur Körperschall-Schwingungsdämpfung ist gemäß Figur 8 eine steife und schwere Zwischenschicht 26 zwischen den beiden Mittelschichten 21 aus Elastomerwerkstoff 22 vorgesehen. Hierbei handelt es sich um eine Stahlplatte 27. Die Stahlplatte 27 wird durch die Körperschall-Schwingungen gezielt zu Eigenschwingungen angeregt, deren Schwingungsenergie dann von dem Elastomerwerkstoff 22 in Wärme umgesetzt und damit unschädlich gemacht wird.

Beim Aufbau der Körperschall-Lärmschutz-Wand mit dem neuen Bausatz können Probleme auftreten, wenn Versorgungsleitungen quer zu der Bodenausnehmung 8 verlaufen, d. h. den geplanten Verlauf der Körperschall-Lärmschutz-Wand kreuzen. Dabei sind weich verformbare Versorgungsleitungen wie Kabel weniger bedenklich, weil sie keine relevanten Körperschall-Brücken darstellen. Sie können daher einfach durch in die Abschirmelemente 9 eingebrachte Löcher hindurchgeführt werden, gegebenenfalls unter elastischer Auffüllung dieser Löcher. Steife Versorgungsleitungen 28 können jedoch sehrwohl Bedeutung als Körperschall-Brücken haben. Eine Möglichkeit, die Körperschall-Übertragung quer zu der Körperschall-Lärmschutz-Wand dennoch zu unterbinden, ist in Figur 9 skizziert. Hier ist für eine steife Versorgungsleitung 28, die in gestrichelten Linien dargestellt ist, ein elastisches Zwischenstück 29 vorgesehen, daß die steife Versorgungsleitung 28 im Bereich der Mittelschicht 21 des Abschirmelements 9 ersetzt. Eine direkte Körperschall-Übertragung über die steife Versorgungsleitung 28 wird so verhindert, da die Bereiche der Versorgungsleitung 28 beiderseits der Mittelschicht 21 entkoppelt sind.

Eine weitere Möglichkeit etwaige Körperschall-Übertragung durch eine steife Versorgungsleitung 28, die durch die Körperschall-Lärmschutz-Wand 9, 15 hindurchtritt, zumindest deutlich zu reduzieren ist in Figur 10 skizziert. Hier ist eine steife Versorgungsleitung 28 bis in die an die Körperschall-Lärmschutz-Wand 9, 15 angrenzenden Bereiche des Erdbodens 5 hinein mit einer elastischen Manschette 30 umgeben. Die elastische Manschette 30 verhindert eine direkte Körperschall-Übertragung zwischen den Deckschichten 19 des Abschirmelements 9. Gleichzeitig hat die elastische Manschette 30 bei Ausbildung aus einem Korperschallschwingungsenergiedissipativen Material auch die Funktion die Körperschall-Schwingungen der steifen Leitung 28 zu dämpfen.

Damit wird auch eine Körperschall-Übertragung aus den an die Körperschall-Lärmschutz-Wand 9, 15 angrenzenden Bereichen des Erdbodens 5 durch die steife Leitung 28 sowie von auf die Versorgungsleitung 28 beschränktem Körperschall reduziert.

### BEZUGSZEICHENLISTE

- 1 -: Gleiskörper
- 2 -: Schiene
- 3 -: Schwelle
- 4 -: Gleisbett
- 5 -: Erdboden
- 6 -: Gebäude
- 7 -: Fundament
- 8 -: Bodenausnehmung
- 9 -: Abschirmelement
- 10 -: Bodenplatte
- 11 -: Stützarm
- 12 -: Nut
- 13 -: Feder
- 14 -: Feder
- 15 -: Fließbeton
- 16 -: Sand
- 17 -: Platte
- 18 -: Gummiplatte
- 19 -: Deckschicht
- 20 -: Beton
- 21 -: Mittelschicht
- 22 -: Elastomerwerkstoff
- 23 -: Luftkammer
- 24 -: Wabe
- 25 -: Kunststoffgranulat
- 26 -: Zwischenschicht
- 27 -: Stahl
- 28 -: Versorgungsleitung
- 29 -: Zwischenstück
- 30 -: Manschette
- 31 -: Bewehrung

## Patentansprüche

1. Bausatz zur Errichtung einer Körperschall-Lärmschutz-Wand, mit flächigen Abschirmelementen zum vertikalen Einbringen in eine schlitzförmige Bodenausnehmung, wobei die Bodenausnehmung beiderseits der Abschirmelemente mit einem aushärtenden Zementgemisch aufzufüllen ist, **dadurch gekennzeichnet**, daß die Abschirmelemente (9) senkrecht zu ihrer Haupterstreckungsebene einen mehrschichtigen Aufbau aufweisen, wobei mindestens eine Deckschicht (19) auf einer der beiden Seiten der Abschirmelemente (9) aus Beton (20) ausgebildet ist und wobei mindestens eine elastische Mittelschicht (21) hinter der Deckschicht (19) angeordnet ist.

2. Bausatz nach Anspruch 1, **dadurch gekennzeichnet**, daß mindestens eine der elastischen Mittelschichten (21) aus einem weichen Elastomerwerkstoff (22) ausgebildet ist.

3. Bausatz nach Anspruch 1 oder 2, **dadurch gekennzeichnet**, daß die elastische Mittelschicht (21) Luftkammern (23) aufweist.

4. Bausatz nach Anspruch 3, **dadurch gekennzeichnet**, daß die elastische Mittelschicht (21) mit den Luftkammern (23) im Querschnitt wabenförmig aufgebaut ist.

5. Bausatz nach einem der Ansprüche 1 bis 4, **dadurch gekennzeichnet**, daß mindestens eine elastische Mittelschicht (21) aus einem schwingungsenergiedissipativen Elastomerwerkstoff (22) ausgebildet ist.

6. Bausatz nach einem der Ansprüche 1 bis 5, **dadurch gekennzeichnet**, daß mindestens eine elastische Mittelschicht (21) aus einem eingekammerten Kunststoffgranulat (25) ausgebildet ist.

7. Bausatz nach einem der Ansprüche 1 bis 6, **dadurch gekennzeichnet**, daß zwischen zwei elastischen Mittelschichten (21) eine schwere, steife Zwischenschicht (26), insbesondere aus Metall oder Beton, angeordnet ist.

8. Bausatz nach einem der Ansprüche 1 bis 7, **dadurch gekennzeichnet**, daß die einzelnen Abschirmelemente (9) in ihrer Haupterstreckungsebene durch Nut-und-Feder-Anordnungen (12, 13) miteinander verbindbar sind.

9. Bausatz nach einem der Ansprüche 1 bis 8, **dadurch gekennzeichnet,** daß für quer zu der schlitzförmigen Bodenausnehmung (8) verlaufende steife Versorgungsleitungen (28) elastische Zwischenstücke (29) vorgesehen sind, die in die Abschirmelemente (9) einsetzbar sind und die zumindest im Bereich einer elastischen Mittelschicht (21) der Abschirmelemente (9) die steifen Versorgungsleitungen (28) ersetzen.

10. Bausatz nach einem der Ansprüche 1 bis 8, **dadurch gekennzeichnet**, daß für quer zu der schlitzförmigen Bodenausnehmung (8) verlaufende steife Versorgungsleitungen (28) elastische Manschetten (30) vorgesehen sind, die durch die Abschirmelemente (9) hindurch führbar sind und die die Versorgungsleitungen (28) zumindest im Bereich der Deckschicht(en) (19) der Abschirmelemente (9) aus Beton (20) und des ausgehärteten Zementgemisches (Fließbeton 15) in der aufgefüllten Bodenausnehmung (8) bezüglich ihrer Körperschall-Schwingungen entkoppeln und/oder dämpfen.
